(19) Europäisches Patentamt
European Patent Office
Office européen des brevets

(11) **EP 4 316 770 A1**

(12) **EUROPEAN PATENT APPLICATION**
published in accordance with Art. 153(4) EPC

(43) Date of publication:
**07.02.2024 Bulletin 2024/06**

(21) Application number: **22780092.7**

(22) Date of filing: **15.03.2022**

(51) International Patent Classification (IPC):
**B29C 41/18** *(2006.01)* **B29K 27/06** *(2006.01)*
**B29L 9/00** *(2006.01)* **B29L 31/58** *(2006.01)*
**B32B 5/22** *(2006.01)* **B32B 27/30** *(2006.01)*
**B32B 27/40** *(2006.01)* **C08K 5/10** *(2006.01)*
**C08L 27/06** *(2006.01)* **C08L 67/02** *(2006.01)*
**B29C 44/00** *(2006.01)*

(52) Cooperative Patent Classification (CPC):
**B29C 41/18; B29C 44/00; B32B 5/22; B32B 27/30;**
**B32B 27/40; C08K 5/10; C08L 27/06; C08L 67/02;**
B29K 2027/06; B29L 2009/00; B29L 2031/58

(86) International application number:
**PCT/JP2022/011717**

(87) International publication number:
**WO 2022/209872 (06.10.2022 Gazette 2022/40)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **29.03.2021 JP 2021055976**

(71) Applicant: **Zeon Corporation**
**Tokyo 100-8246 (JP)**

(72) Inventors:
• **FUJIWARA Takanori**
**Tokyo 100-8246 (JP)**
• **KIDA Nao**
**Tokyo 100-8246 (JP)**

(74) Representative: **Maiwald GmbH**
**Elisenhof**
**Elisenstraße 3**
**80335 München (DE)**

(54) **VINYL CHLORIDE RESIN COMPOSITION, VINYL CHLORIDE RESIN MOLDED BODY, AND LAMINATE**

(57)    A vinyl chloride resin composition excellent in high-temperature powder fluidity is provided. The vinyl chloride resin composition includes a vinyl chloride resin and a plasticizer, and satisfies at least one of: (1) a tetrahydrofuran-insoluble content ratio being 10 mass% or more; and (2) a ratio between the tetrahydrofuran-insoluble content ratio and a content ratio of the plasticizer (tetrahydrofuran-insoluble content ratio/plasticizer content ratio) being 0.20 or more.

EP 4 316 770 A1

**Description**

TECHNICAL FIELD

The present disclosure relates to a vinyl chloride resin composition, a vinyl chloride resin molded product, and a laminate.

BACKGROUND

Vinyl chloride resins are generally excellent in such characteristics as cold resistance, heat resistance, oil resistance, or else, and thus used in a variety of applications.

Specifically, automobile interior materials used for forming automobile interior components, such as automobile instrument panels and door trims, include a surface skin formed by a vinyl chloride resin molded product and a laminate obtained by lining a surface skin formed by a vinyl chloride resin molded product with a foamed product such as foamed polyurethane.

A vinyl chloride resin molded product constituting a surface skin of an automobile interior component such as an automobile instrument panel is produced by powder molding a vinyl chloride resin composition containing a vinyl chloride resin, a plasticizer, and an additive such as a stabilizer and a pigment, using a known molding method such as powder-slush molding (for example, see Patent Literature (PTL) 1).

Specifically, for example, according to PTL 1, a vinyl chloride resin composition containing a vinyl chloride resin, a plasticizer such as a trimellitic acid ester and a predetermined polyester, and an additive such as a stabilizer and a pigment is subjected to powder-slush molding, whereby a surface skin made of a vinyl chloride resin molded product is produced.

CITATION LIST

Patent Literature

PTL 1: WO 2020/090556 A1

SUMMARY

(Technical Problem)

Here, vinyl chloride resin compositions are required to be excellent in powder fluidity in view of, for example, facilitating molding such as powder molding. A vinyl chloride resin molded product, when obtained by molding a vinyl chloride resin composition excellent in powder fluidity, will have little unevenness in thickness, density, and the like, and thus can be suitably used as a surface skin of an automobile interior component. Then, the powder molding is performed using a heated mold, and thus the vinyl chloride resin compositions are particularly required to be excellent in powder fluidity under high-temperature condition (which is also referred to as "high-temperature powder fluidity" hereinafter).

However, the vinyl chloride resin composition of the related art has room for improvement in terms of high-temperature powder fluidity.

Therefore, it could be helpful to provide a vinyl chloride resin composition excellent in high-temperature powder fluidity.

It could also be helpful to provide a vinyl chloride resin molded product formed using the vinyl chloride resin composition.

Further, it could be helpful to provide a laminate including the vinyl chloride resin molded product.

(Solution to Problem)

Diligent investigation has been made with an aim of solving the objectives set forth above. Then, it has been found that a vinyl chloride resin composition, when containing a vinyl chloride resin and a plasticizer and satisfying at least one of two predetermined conditions regarding the tetrahydrofuran-insoluble content ratio, is excellent in high-temperature powder fluidity, which has completed the present disclosure.

That is, the present disclosure aims to advantageously solve the objectives set forth above, and disclose a vinyl chloride resin composition including a vinyl chloride resin and a plasticizer, and satisfies at least one of the following (1) and (2).

(1) The tetrahydrofuran-insoluble content ratio is 10 mass% or more.

(2) The ratio between the tetrahydrofuran-insoluble content ratio and a content ratio of the plasticizer (tetrahydrofuran-insoluble content ratio/plasticizer content ratio is 0.20 or more.

As described above, a vinyl resin composition which contains a vinyl chloride resin and a plasticizer and satisfies at least one of the aforementioned two predetermined conditions regarding the tetrahydrofuran-insoluble content ratio can exhibit excellent high-temperature powder fluidity.

In the present disclosure, the "tetrahydrofuran-insoluble content" in the vinyl chloride resin composition can be measured according to the method described in Examples disclosed herein, using, as a measurement sample, a vinyl chloride resin composition or a vinyl chloride resin molded product formed by using the vinyl chloride resin composition.

Further, in the present disclosure, the "content ratio of the plasticizer" in the vinyl chloride resin composition can be measured by a Soxhlet extraction method using, as a measurement sample, a vinyl chloride resin composition or a vinyl chloride resin molded product formed by using the vinyl chloride resin composition.

Here, the disclosed vinyl chloride resin composition preferably further includes a cross-linked vinyl chloride resin. When the vinyl chloride resin composition further includes a cross-linked vinyl chloride resin, the vinyl chloride resin composition can be further improved in high-temperature powder fluidity.

Further, in the disclosed vinyl chloride resin composition, the cross-linked vinyl chloride resin is contained preferably at 0.05 mass% or more and 15 mass% or less. When the cross-linked vinyl chloride resin in the vinyl chloride resin composition is contained at a ratio that falls within the aforementioned predetermined range, the vinyl chloride resin composition can be further improved in high-temperature powder fluidity, while suppressing stickiness on a surface of the resulting vinyl chloride resin molded product. Further, when the cross-linked vinyl chloride resin in the vinyl chloride resin composition is contained at a ratio that falls within the aforementioned predetermined range, the vinyl chloride resin composition can be ensured to have sufficiently high meltability, and the resulting vinyl chloride resin molded product can have tensile properties (in particular, tensile elongation) favorably maintained.

In the disclosed vinyl chloride resin composition, the cross-linked vinyl chloride resin is contained preferably at 0.1 parts by mass or more and 30 parts by mass or less with respect to 100 parts by mass of the vinyl chloride resin. When the cross-linked vinyl chloride resin in the vinyl chloride resin composition is contained at a ratio that falls within the aforementioned predetermined range with respect to 100 parts by mass of the vinyl chloride resin, the vinyl chloride resin composition can be further improved in high-temperature powder fluidity, while suppressing stickiness on a surface of the resulting vinyl chloride resin molded product. Further, when the cross-linked vinyl chloride resin is contained at a ratio that falls within the aforementioned predetermined range, the vinyl chloride resin composition can be ensured to have sufficiently high meltability, and the resulting vinyl chloride resin molded product can have tensile properties (in particular, tensile elongation) favorably maintained.

Further, in the disclosed vinyl chloride resin composition, the vinyl chloride resin preferably includes vinyl chloride resin particles and vinyl chloride resin fine particles, and the cross-linked vinyl chloride resin and the vinyl chloride resin fine particles are preferably contained in a mass ratio (cross-linked vinyl chloride resin/vinyl chloride resin fine particles) of 1/2 or more and 20/1 or less. When the vinyl chloride resin includes the vinyl chloride resin particles and the vinyl chloride resin fine particles, and the vinyl chloride resin composition contains the cross-linked vinyl chloride resin and the vinyl chloride resin fine particles in a mass ratio (cross-linked vinyl chloride resin/vinyl chloride resin fine particles) that falls within the aforementioned range, the vinyl chloride resin composition can be further improved in high-temperature powder fluidity, while suppressing stickiness on a surface of the resulting vinyl chloride resin molded product. Further, when the vinyl chloride resin composition contains the cross-linked vinyl chloride resin and the vinyl chloride resin fine particles in a mass ratio (cross-linked vinyl chloride resin/vinyl chloride resin fine particles) that falls within the aforementioned range, the vinyl chloride resin composition can be ensured to have sufficiently high meltability, and the resulting vinyl chloride resin molded product can have the tensile properties (in particular, tensile elongation) favorably maintained.

Further, in the disclosed vinyl chloride resin composition, the plasticizer preferably includes at least one of a trimellitic acid ester and a polyester. When the vinyl chloride resin composition includes at least one of a trimellitic acid ester and a polyester, the resulting vinyl chloride resin molded product can be improved in tensile properties (tensile elongation and tensile stress).

Further, in the disclosed vinyl chloride resin composition, the plasticizer preferably includes a trimellitic acid ester and a polyester, and the trimellitic acid ester and the polyester are contained preferably in a mass ratio (trimellitic acid ester/polyester) of 1/9 or more and 9/1 or less. When the plasticizer contained in the vinyl chloride resin composition contains the trimellitic acid ester and the polyester in a mass ratio (trimellitic acid ester/polyester) that falls within the aforementioned predetermined range, the vinyl chloride resin composition can be further improved in high-temperature powder fluidity, and the resulting vinyl chloride resin molded product can be further enhanced in tensile properties (tensile elongation and tensile stress).

In the disclosed vinyl chloride resin composition, the plasticizer is preferably contained at 30 parts by mass or

3

more and 200 parts by mass or less with respect to 100 parts by mass of the vinyl chloride resin. When the plasticizer in the vinyl chloride resin composition is contained at a content that falls with within the predetermined range with respect to 100 parts by mass of the vinyl chloride resin, the vinyl chloride resin composition can be further improved in high-temperature powder fluidity, and the resulting vinyl chloride resin molded product can be further enhanced in tensile properties (tensile elongation and tensile stress).

The disclosed vinyl chloride resin composition is preferably used for powder molding. When the vinyl chloride resin composition is used for powder molding, for example, a vinyl chloride resin molded product that can be favorably used as an automobile interior material such as a surface skin for an automobile instrument panel can be readily obtained.

Further, the disclosed vinyl chloride resin composition is preferably used for powder-slush molding. When the vinyl chloride resin composition is used for powder-slush molding, for example, a vinyl chloride resin molded product that can be favorably used as an automobile interior material such as a surface skin for an automobile instrument panel can be more readily obtained.

The present disclosure furthermore aims to advantageously solve the objectives set forth above, and discloses a vinyl chloride resin molded product obtainable through molding of any one of the vinyl chloride resin compositions set forth above. As described above, the vinyl chloride resin molded product formed through molding of the vinyl chloride resin composition excellent in high-temperature powder fluidity has less unevenness in thickness, density, and the like.

Then, t disclosed vinyl chloride resin molded product is preferably for use in an automobile instrument panel surface skin. The disclosed vinyl chloride resin molded product can be suitably used as a surface skin of an automobile instrument panel with less unevenness in thickness, density, and the like.

Further, the present disclosure furthermore aims to advantageously solve the objectives set forth above, and discloses a laminate having a foamed polyurethane molded product and any of the aforementioned vinyl chloride resin molded bodies. A laminate having a foamed polyurethane molded product and any of the aforementioned vinyl chloride resin molded bodies includes a vinyl chloride resin molded product portion that has less unevenness in thickness, density, and the like.

Then, the disclosed laminate is preferably for use in an automobile instrument panel. As described above, when the disclosed laminate is used for an automobile instrument panel, the resulting automobile instrument panel has a surface skin with reduced unevenness in thickness, density, or the like.

(Advantageous Effect)

The present disclosure can provide a vinyl chloride resin composition excellent in high-temperature powder fluidity.

The present disclosure can further provide a vinyl chloride resin molded product that is formed using the vinyl chloride resin composition.

The present disclosure can still further provide a laminate including the vinyl chloride resin molded product.

DETAILED DESCRIPTION

The following provides a detailed description of embodiments of the present disclosure.

The disclosed vinyl chloride resin composition can be used, for example, in forming the disclosed vinyl chloride resin molded product. Further, a vinyl chloride resin molded product formed using the disclosed vinyl chloride resin composition can suitably be used, for example, as an automobile interior material such as a surface skin included in an automobile interior component such as an automobile instrument panel or a door trim.

The disclosed vinyl chloride resin molded product can be used, for example, in forming the disclosed laminate. Moreover, a laminate formed using the disclosed vinyl chloride resin molded product can suitably be used, for example, as an automobile interior material used in production of an automobile interior component such as an automobile instrument panel or a door trim.

(Vinyl chloride resin composition)

The disclosed vinyl chloride resin composition includes a vinyl chloride resin (a) and a plasticizer (b), and satisfies at least one of two predetermined conditions regarding the tetrahydrofuran-insoluble content ratio.

Here, the disclosed vinyl chloride resin composition preferably further includes a cross-linked vinyl chloride resin (c).

The disclosed vinyl chloride resin composition may optionally further include additives other than the vinyl chloride resin (a), the plasticizer (b), and the cross-linked vinyl chloride resin (c).

Then, the disclosed vinyl chloride resin composition contains the vinyl chloride resin (a) and the plasticizer (b) described above, and satisfies at least one of two predetermined conditions related to the tetrahydrofuran-insoluble content ratio, and thus is excellent in high-temperature powder fluidity, though the reason is unclear. In particular, the disclosed vinyl chloride resin composition is excellent in powder fluidity under high-temperature condition (i.e., high-temperature powder fluidity). In this disclosure, the temperature of the vinyl chloride resin composition under the "high-temperature condition" is not particularly limited, but may be, for example, 30 °C or higher, may be 40 °C or higher, may be 50 °C or higher, or may be 60 °C or higher. The disclosed vinyl chloride resin composition, which is excellent in high-temperature powder fluidity, can be molded into a vinyl chloride resin molded product that has little unevenness in thickness, density, and the like. Further, the vinyl chloride resin molded product formed by using the disclosed vinyl chloride resin composition is suppressed to be sticky on the surface thereof.

Therefore, the disclosed vinyl chloride resin composition can be used to obtain a vinyl chloride resin molded product suitable as an automobile interior material, such as a surface skin for an automobile instrument panel and a surface skin for a door trim.

The disclosed vinyl chloride resin composition is preferably used in powder molding, and is more preferably used in powder-slush molding, in view of, for example, readily obtaining a vinyl chloride resin molded product that can favorably be used as an automobile interior material using the disclosed vinyl chloride resin composition.

<Vinyl chloride resin (a)>

As the vinyl chloride resin (a), in general, a particulate vinyl chloride resin is used. The vinyl chloride resin (a) may contain, for example, one kind or two or more kinds of vinyl chloride resin particles, and may optionally further contain one kind or two or more kinds of vinyl chloride resin fine particles. In particular, the vinyl chloride resin (a) preferably includes at least vinyl chloride resin particles, and more preferably includes vinyl chloride resin particles and vinyl chloride resin fine particles.

The vinyl chloride resin (a) may be produced by any production method known in the art such as suspension polymerization, emulsion polymerization, solution polymerization, or bulk polymerization.

The present disclosure, the term "resin particles" refers to particles with a particle diameter of 30 $\mu$m or more, and the term "resin fine particles" refers to particles with a particle diameter of less than 30 $\mu$m.

Examples of the vinyl chloride resin (a) include homopolymers composed of vinyl chloride monomer units and also vinyl chloride-based copolymers preferably including 50 mass% or more of vinyl chloride monomer units, and more preferably 70 mass% or more of vinyl chloride monomer units. Specific examples of monomers (comonomers) copolymerizable with vinyl chloride monomer to form a vinyl chloride-based copolymer include those described in WO 2016/098344 A1, for example. One kind of these components may be used alone, or two or more kinds of these components may be used in combination at arbitrary ratios.

In the present disclosure, the vinyl chloride resin (a) is an uncross-linked vinyl chloride resin. That is, the vinyl chloride resin (a) does not include the cross-linked vinyl chloride resin (c) described later.

The content ratio of the vinyl chloride resin (a) in the vinyl chloride resin composition can be appropriately adjusted to the extent that the desired effect anticipated by the disclosure can be obtained, but is preferably, for example, 30 mass% or more and 70 mass% or less.

«Vinyl chloride resin particles»

In the vinyl chloride resin composition, the vinyl chloride resin particles generally serve as a matrix resin (substrate). The vinyl chloride resin particles are preferably produced by suspension polymerization.

[Average degree of polymerization]

The average degree of polymerization of the vinyl chloride resin constituting the vinyl chloride resin particles is preferably 800 or more, more preferably 1000 or more, preferably 5000 or less, more preferably 3000 or less, still more preferably 2800 or less. The reason is that when the average degree of polymerization of the vinyl chloride resin forming the vinyl chloride resin particles is equal to or greater than the lower limit set forth above, a vinyl chloride resin molded product formed by using the vinyl chloride resin composition can be ensured to have sufficient physical strength while being improved in, for example, tensile properties, in particular, tensile elongation. A vinyl chloride resin molded product having favorable tensile elongation can suitably be used as an automobile interior material such as a surface skin of an automobile instrument panel that has excellent ductility, to allow an inflated and deployed airbag to rupture as designed without scattering of fragments. Another reason is that when the average degree of polymerization of the vinyl chloride resin forming the vinyl chloride resin particles is equal to or less than the upper limit set forth above, the vinyl chloride resin composition can be improved in meltability.

The "average degree of polymerization" referred to in the present disclosure can be measured in accordance with JIS K6720-2.

[Average particle diameter]

The average particle diameter of the vinyl chloride resin particles is usually 30 μm or more, preferably 50 μm or more, more preferably 100 μm or more, preferably 500 μm or less, more preferably 200 μm or less. The reason is that when the average particle diameter of the vinyl chloride resin particles is equal to or larger than the lower limit set forth above, the vinyl chloride resin composition is further improved in powder fluidity, in particular, high-temperature powder fluidity. Another reason is that when the average particle diameter of the vinyl chloride resin particles is equal to or smaller than the upper limit set forth above, the vinyl chloride resin composition can be improved in meltability, and the vinyl chloride resin molded product formed using that composition can be improved in surface smoothness.

The "average particle diameter" referred to in the present disclosure can be measured as the volume-average particle diameter by laser diffraction in accordance with JIS Z8825.

[Content ratio]

The content ratio of the vinyl chloride resin particles in the vinyl chloride resin (a) is preferably 80 mass% or more, more preferably 90 mass% or more, still more preferably 95 mass% or more, may be 100 mass%, and preferably 99 mass% or less. The reason is that when the content ratio of the vinyl chloride resin particles in the vinyl chloride resin (a) is equal to or higher than the lower limit set forth above, a vinyl chloride resin molded product formed by using the vinyl chloride resin can be ensured to have sufficient physical strength while having favorable tensile elongation. Another reason is that when the content ratio of the vinyl chloride resin particles in the vinyl chloride resin (a) is equal to or lower than the upper limit set forth above, the vinyl chloride resin composition can be further improved in powder fluidity, in particular, high-temperature powder fluidity.

The content ratio of the vinyl chloride resin particles in the vinyl chloride resin composition can be appropriately adjusted to the extent that the desired effect anticipated by the disclosure can be obtained, but may be, for example, 25 mass% or more, preferably 26 mass% or more, may be 70 mass% or less, preferably 69.5 mass% or less.

«Vinyl chloride resin fine particles»

In the vinyl chloride resin composition, the vinyl chloride resin fine particles generally serve as a dusting agent (powder fluidity modifier). The vinyl chloride resin fine particles are preferably produced by emulsion polymerization.

[Average degree of polymerization]

The average degree of polymerization of a vinyl chloride resin forming the vinyl chloride resin fine particles is preferably 500 or more, more preferably 700 or more, preferably 2600 or less, more preferably 2400 or less. The reason is that when the vinyl chloride resin constituting the vinyl chloride resin fine particles serving as a dusting agent has an average degree of polymerization that is equal to or higher than the lower limit set forth above, the vinyl chloride resin composition is further improved in powder fluidity, in particular, high-temperature powder fluidity, and the resulting molded product obtainable by using that composition has favorable tensile elongation. Another reason is that when the vinyl chloride resin constituting the vinyl chloride resin fine particles has an average degree of polymerization that is equal to or lower than the upper limit set forth above, the vinyl chloride resin composition is improved in meltability, and the resulting vinyl chloride resin molded product formed by using that composition is improved in surface smoothness.

[Average particle diameter]

The vinyl chloride resin fine particles have an average particle diameter that is usually less than 30 μm, preferably 10 μm or less, more preferably 5 μm or less, preferably 0.1 μm or more, more preferably 1 μm or more. The reason is that when the vinyl chloride resin fine particles have an average particle diameter that is equal to or larger than the lower limit set forth above, the vinyl chloride resin composition can have further favorable powder fluidity, in particular, high-temperature powder fluidity, without being excessively reduced in size to serve as a dusting agent. Another reason is that when the vinyl chloride resin fine particles have an average particle diameter that is equal to or smaller than the upper limit set forth above, the vinyl chloride resin composition is enhanced in meltability, and the resulting vinyl chloride resin molded product is improved in surface smoothness.

[Content ratio]

The content ratio of the vinyl chloride resin fine particles in the vinyl chloride resin (a) may be 0 mass%, but is preferably 1 mass% or more, preferably 20 mass% or less, more preferably 10 mass% or less, still more preferably 5 mass% or less. The reason is that when the content ratio of the vinyl chloride resin fine particles in the vinyl chloride resin (a) is equal to or greater the lower limit set forth above, the vinyl chloride resin composition is further improved in powder fluidity. Another reason is that when the content ratio of the vinyl chloride resin fine particles in the vinyl chloride resin (a) is equal to or lower than the upper limit set forth above, the resulting vinyl chloride resin molded product formed by using the vinyl chloride resin composition can be increased in physical strength.

Further, the content ratio of the vinyl chloride resin fine particles in the vinyl chloride resin composition may be appropriately adjusted to the extent that the desired effect anticipated by the disclosure can be obtained, but may be, for example, 0 mass% or more, preferably 0.5 mass% or more, may be 5 mass% or less, and preferably 4 mass% or less.

<Plasticizer (b)>

The plasticizer (b) is not particularly limited, but preferably includes at least one of trimellitic acid ester (b1) and polyester (b2). When at least one of trimellitic acid ester (b1) and polyester (b2) is included as the plasticizer (b) to be used in the disclosed vinyl chloride resin composition, a vinyl chloride resin molded product excellent in tensile properties (tensile elongation and tensile stress) can be formed. In addition, in view of further improving the vinyl chloride resin composition in high-temperature powder fluidity, the plasticizer (b) preferably includes at least polyester (b2), and more preferably includes both trimellitic acid ester (b1) and polyester (b2).

The plasticizer (b) may contain other plasticizers than trimellitic acid ester (b1) and polyester (b2).

The content ratio of the plasticizer (b) in the vinyl chloride resin composition can be appropriately adjusted to the extent that the desired effect anticipated by the disclosure can be obtained, but may be, for example, 25 mass% or more and 65 mass% or less.

<Trimellitic acid ester (b1)>

The trimellitic acid ester (b1) contained in the plasticizer (b) is preferably an ester compound of trimellitic acid and a monohydric alcohol.

Specific examples of the monohydric alcohol include, but are not limited to, aliphatic alcohols such as 1-hexanol, 1-heptanol, 1-octanol, 2-ethylhexanol, 1-nonanol, 1-decanol, 1-undecanol, and 1-dodecanol. Of those, as the monohydric alcohol, an aliphatic alcohol having 6 to 18 carbon atoms is preferred and a linear aliphatic alcohol having 6 to 18 carbon atoms is more preferred.

Of those, preferred as the trimellitic acid ester (b1) is a triesteride obtained by using the aforementioned monohydric alcohol to esterify substantially all the carboxy groups of trimellitic acid. Alcohol residue portions in the triesteride may all be derived from the same alcohol or may each be derived from a different alcohol.

The trimellitic acid ester (b1) above may be a single compound or a mixture of different compounds.

Specific examples of suitable trimellitic esters (b1) include trimellitic acid tri-n-hexyl, trimellitic acid tri-n-heptyl, trimellitic acid tri-n-octyl, trimellitic tri-(2-ethylhexyl), trimellitic acid tri-n-nonyl, trimellitic acid tri-n-decyl, trimellitic acid triisodecyl, trimellitic acid tri-n-undecyl, trimellitic acid tri-n-dodecyl, trimellitic acid trialkyl ester (esters having, in the molecule, two or more kinds of alkyl groups with different carbon numbers [but having 6 to 18 carbon atoms]), trimellitic acid tri-n-alkyl ester (ester having, in the molecule, two or more kinds of alkyl groups with different carbon numbers[but having 6 to 18 carbon atoms]), and mixtures thereof.

Specific examples of more preferred trimellitic acid ester (b1) include trimellitic acid tri-n-octyl, trimellitic tri-(2-ethylhexyl), trimellitic acid tri-n-nonyl, trimellitic acid tri-n-decyl, trimellitic acid tri-n-alkyl ester (ester having, in the molecule, two or more kind so f alkyl groups with different carbon numbers [but having 6 to 18 carbon atoms]), and mixtures thereof.

The content ratio of the trimellitic acid ester (b1) in the plasticizer (b) may be 0 mass% or more, preferably 10 mass% or more, more preferably 20 mass% or more, still more preferably 25 mass% or more, may be 100 mass% or less, preferably 65 mass% or less, more preferably 55 mass% or less, still more preferably 45 mass% or less. When the content ratio of the trimellitic acid ester (b1) in the plasticizer (b) is within the aforementioned predetermined range, the vinyl chloride resin composition can be further improved in high-temperature powder fluidity, and the resulting vinyl chloride resin molded product can be further enhanced in tensile properties (tensile elongation and tensile stress).

The content of the trimellitic acid ester (b1) in the vinyl chloride resin composition may be 0 parts by mass or more, preferably 10 parts by mass or more, more preferably 20 parts by mass or more, still more preferably 25 parts by mass or more, preferably 100 parts by mass or less, more preferably 65 parts by mass or less, still more preferably 55 parts by mass or less, further more preferably 45 parts by mass or less, with respect to 100 parts by mass of the vinyl chloride resin composition (a). When the content of the trimellitic acid ester (b) in the vinyl chloride resin composition is within the aforementioned predetermined range, the vinyl chloride resin composition can be further improved in high-temperature powder fluidity, and the resulting vinyl chloride resin molded product can be further enhanced in tensile properties (tensile elongation and tensile stress).

«Polyester (b2)»

The polyester (b2) contained in the plasticizer (b) is not particularly limited, and for example, a polyester containing a structural unit derived from adipic acid (adipic acid-based polyester), a polyester containing a structural unit derived from sebacic acid (sebacic acid-based polyester), and a polyester containing a structural unit derived from phthalic acid (phthalic acid-based polyester) may be used. One kind of these polyesters may each be used alone, or two or more kinds of these polyesters may be used in combination at arbitrary ratios.

The polyester (b2) included in the plasticizer (b) is not particularly limited, and for example, a polyester containing structural units derived from a diol compound such as 3-methyl-1,5-pentanediol and 1,3-butanediol may be used.

Then, in view of further enhancing the resulting vinyl chloride resin molded product in tensile properties (tensile elongation and tensile stress), polyesters to be used as the polyester (b2) preferably include a polyester containing a structural unit derived from adipic acid, more preferably include a polyester containing a structural unit derived from adipic acid and a structural unit derived from a diol compound, and particularly preferably include a polyester containing a structural unit derived from adipic acid and a structural unit derived from 3-methyl-1,5-pentanediol.

Hereinafter, for the sake of explanation, a polyester containing a structural unit derived from adipic acid and a structural unit derived from 3-methyl-1,5-pentanediol will be referred to as "Polyester A".

Here, Polyester A containing the aforementioned predetermined structural units may have a structural unit other than the structural unit derived from adipic acid and the structural unit derived from 3-methyl-1,5-pentanediol, but the sum of the structural unit derived from adipic acid and the structural unit derived from 3-methyl-1,5-pentanediol is preferably 50 mass% or more, and more preferably 80 mass% or more, of the total structural units. Polyester A containing the aforementioned predetermined structural units preferably has, as repeating units, only a structural unit derived from adipic acid and a structural unit derived from 3-methyl-1,5-pentanediol.

Polyester A containing the aforementioned predetermined structural units is not particularly limited, and can be obtained by condensation polymerization of adipic acid and 3-methyl-1,5-pentanediol. The aforementioned condensation polymerization may be carried out in the presence of a catalyst. In addition, the aforementioned condensation polymerization can be carried out using an alcohol and/or a base acid, as a terminal stop component. Further, the condensation polymerization of adipic acid and 3-methyl-1,5-pentanediol may be performed together with or separately from the termination reaction of the resulting condensation polymerization product and the terminal termination component. Further, the product obtained through the condensation polymerization and the termination reaction may be subjected to post-treatment such as distillation. As the reaction conditions for the condensation polymerization, known conditions may be adopted to determine the amount of the monomer, the catalyst, and the terminal stop component to be used.

As Polyester A containing the aforementioned predetermined structural units, a commercially available product may be used.

The catalyst used in the condensation polymerization reaction is not particularly limited, and examples thereof include dibutyltin oxide, tetraalkyl titanate, and the like.

Examples of alcohols that can be used as the terminal stop component include methanol, ethanol, propanol, isopropanol, butanol, isobutanol, pentanol, hexanol, isohexanol, heptanol, isoheptanol, octanol, isooctanol, 2-ethylhexanol, nonanol, isononanol, decanol, isodecanol, isoundecanol, dodecanol, tridecanol, isotridecanol, tetradecanol, pentadecanol, hexadecanol, heptadecanol, octadecanol, cellosolve, carbitol, phenol, nonylphenol, benzyl alcohols, and mixtures thereof.

Further, monobasic acids that can be used as terminal stop components include, for example, acetic acid, propionic acid, butyric acid, isobutyric acid, valeric acid, pivalic acid, caproic acid, heptanoic acid, caprylic acid, 2-ethylhexylic acid, pelargonic acid, capric acid, undecanoic acid, lauric acid, tridecanoic acid, myristic acid, pentadecanoic acid, palmitic acid, heptadecanoic acid, stearic acid, benzoic acid, and mixtures thereof.

Of those, 2-ethylhexanol is preferred as the terminal stop component.

Polyester A containing the aforementioned predetermined structural units preferably has a number average molecular weight of 1000 or more, more preferably 2000 or more, preferably 10000 or less, more preferably 7000 or less.

The "number average molecular weight" can be measured by VPO (vapor pressure osmolality) method.

In addition, Polyester A containing the aforementioned predetermined structural units preferably has an acid value of 1 mgKOH/g or less.

Further, Polyester A containing the aforementioned predetermined structural units preferably has a hydroxyl value of 30 mgKOH/g or less.

Further, Polyester A containing the aforementioned predetermined structural units has a viscosity of preferably 500 mPa·s or more, more preferably 1000 mPa·s or more, 8000 mPa·s or less, more preferably 5000 mPa·s or less.

The "viscosity" can be measured in accordance with JIS Z8803, at 23 °C.

The content ratio of the polyester (b2) in the plasticizer (b) may be 0 mass% or more, preferably 35 mass% or more, more preferably 45 mass% or more, still more preferably 55 mass% or more, may be 100 mass% or less, preferably 90 mass% or less, more preferably 80 mass% or less, still more preferably 75 mass% or less. When the content ratio of the polyester (b2) in the plasticizer (b) is within the aforementioned predetermined range, the vinyl chloride resin composition can be further improved in high-temperature powder fluidity, and the resulting vinyl chloride resin molded product can be further enhanced in tensile properties (tensile elongation and tensile stress).

The content of the polyester (b2) in the vinyl chloride resin composition may be 0 parts by mass or more, preferably 20 parts by mass or more, more preferably 35 parts by mass or more, still more preferably 45 parts by mass or more, further more preferably 55 parts by mass or more, preferably 100 parts by mass or less, more preferably 90 parts by mass or less, still more preferably 85 parts by mass or less, further more preferably 80 parts by mass or less, with respect to 100 parts by mass of the aforementioned vinyl chloride resin composition (a). When the content of the polyester (b2) in the vinyl chloride resin composition is within the aforementioned predetermined range, the vinyl chloride resin composition can be further improved in high-temperature powder fluidity, and the vinyl chloride resin molded product can be further enhanced in tensile properties (tensile elongation and tensile stress).

Further, the sum of the contents of the trimellitic acid ester (b1) and the polyester (b2) in the vinyl chloride resin composition is preferably 30 parts by mass or more, more preferably 45 parts by mass or more, still more preferably 65 parts by mass or more, further more preferably 80 parts by mass or more, preferably 200 parts by mass or less, more preferably 155 parts by mass or less, still more preferably 140 parts by mass or less, further more preferably 125 parts by mass or less, with respect to 100 parts by mass of the vinyl chloride resin (a). When the sum of the contents of the trimellitic acid ester (b1) and the polyester (b2) in the vinyl chloride resin composition is within the aforementioned predetermined range, the vinyl chloride resin composition can be further improved in high-temperature powder fluidity, and the resulting vinyl chloride resin molded product can be further enhanced in tensile properties (tensile elongation and tensile stress).

The trimellitic acid ester (b1) and the polyester (b2) in the vinyl chloride resin composition are contained in a mass ratio (trimellitic acid ester/polyester) of preferably 1/9 or more, more preferably 1/4 or more, still more preferably 1/3 or more, further more preferably 3/8 or more, preferably 9/1, more preferably 2/1 or less, still more preferably 1/1 or less, further more preferably 2/3 or less. When the mass ratio (trimellitic acid ester/polyester) of the trimellitic acid ester (b1) and the polyester (b2) in the vinyl chloride resin composition is within the aforementioned predetermined range, the vinyl chloride resin composition can be further improved in high-temperature powder fluidity, and the resulting vinyl chloride resin molded product can be further enhanced in tensile properties (tensile elongation and tensile stress).

<<Other plasticizer(s) (b3)>

The plasticizer (b) included in the vinyl chloride resin composition may optionally include other plasticizer(s) (also referred to as "other plasticizer(s) (b3)") than the aforementioned trimellitic acid ester (b1) and polyester (b2).

Specific examples of the other plasticizer(s) (b3) include, among the plasticizers described in WO 2016/098344 A1, the primary plasticizers and the secondary plasticizers, excluding the aforementioned trimellitic acid ester (b1) and polyester (b2).

Specifically, examples of the so-called primary plasticizer include:

pyromellitic acid ester plasticizers such as tetrahexyl pyromellitic acid tetra-n-hexyl, pyromellitic acid tetra-n-heptyl, pyromellitic acid tetra-n-octyl, pyromellitic acid tetra-(2-ethylhexyl), pyromellitic acid tetra-n-nonyl, pyromellitic acid tetra-n-decyl, pyromellitic acid tetraisodecyl, pyromellitic acid tetra-n-undecyl, pyromellitic acid tetra-n-dodecyl, pyromellitic acid tetra-n-dodecyl, and pyromellitic acid tetra-n-alkyl ester (ester having, in the molecule, two or more kinds of alkyl groups with different carbon numbers [but having 6 to 12 carbon atoms]);

phthalic acid derivatives such as dimethyl phthalate, diethyl phthalate, dibutyl phthalate, di-(2-ethylhexyl) phthalate, di-n-octyl phthalate, diisobutyl phthalate, diheptyl phthalate, diphenyl phthalate, diisodecyl phthalate, ditridecyl phthalate, diundecyl phthalate, dibenzyl phthalate, butyl benzyl phthalate, dinonyl phthalate, and dicyclohexyl phthalate;

isophthalic acid derivatives such as dimethyl isophthalate, di(2-ethylhexyl) isophthalate, and diisooctyl isophthalate;

tetrahydrophthalic acid derivatives such as di(2-ethylhexyl) tetrahydrophthalate, di-n-octyl tetrahydrophthalate, and diisodecyl tetrahydrophthalate;

adipic acid derivatives such as di-n-butyl adipate, di(2-ethylhexyl) adipate, diisodecyl adipate, and diisononyl adipate;

azelaic acid derivatives such as di(2-ethylhexyl) azelate, diisooctyl azelate, and di-n-hexyl azelate;

s ebacic acid derivatives such as di-n-butyl sebacate, di(2-ethylhexyl) sebacate, diisodecyl sebacate, and di(2-butyloctyl) sebacate;

maleic acid derivatives such as di-n-butyl maleate, dimethyl maleate, diethyl maleate, and di(2-ethylhexyl) maleate;

fumaric acid derivatives such as di-n-butyl fumarate and di(2-ethylhexyl) fumarate;

citric acid derivatives such as triethyl citrate, tri-n-butyl citrate, acetyl triethyl citrate, and acetyl tri(2-ethylhexyl) citrate;

itaconic acid derivatives such as monomethyl itaconate, monobutyl itaconate, dimethyl itaconate, diethyl itaconate, dibutyl itaconate, and di(2-ethylhexyl) itaconate;

oleic acid derivatives such as butyl oleate, glyceryl monooleate, and diethylene glycol monooleate;

ricinoleic acid derivatives such as methylacetyl ricinoleate, butylacetyl ricinoleate, glyceryl monoricinoleate, and diethylene glycol monoricinoleate;

stearic acid derivatives such as n-butyl stearate and diethylene glycol distearate;

other fatty acid derivatives such as diethylene glycol monolaurate, diethylene glycol dipelargonate, and pentaerythritol fatty acid esters;

phosphoric acid derivatives such as triethyl phosphate, tributyl phosphate, tri(2-ethylhexyl) phosphate, tributoxyethyl phosphate, triphenyl phosphate, cresyl diphenyl phosphate, tricresyl phosphate, trixylenyl phosphate, and tris(chloroethyl) phosphate;

glycol derivatives such as diethylene glycol dibenzoate, dipropylene glycol dibenzoate, triethylene glycol dibenzoate, triethylene glycol di(2-ethylbutyrate), triethylene glycol di(2-ethylhexanoate), and dibutyl methylenebisthioglycolate;

glycerin derivatives such as glycerol monoacetate, glycerol triacetate, and glycerol tributyrate;

epoxy derivatives such as epoxy hexahydro diisodecyl phthalate, epoxy triglyceride, epoxidized octyl oleate, and epoxidized decyl oleate; and the like.

Examples of the so-called secondary plasticizer include epoxidized vegetable oils, such as epoxidized soybean oil and epoxidized linseed oil; fatty acid esters of glycols, such as chlorinated paraffin and triethylene glycol dicaprylate; butyl epoxy stearate; phenyl oleate; and methyl dihydroabietate.

Of those, in view of further enhancing the resulting vinyl chloride resin molded product in tensile properties (tensile elongation and tensile stress), epoxidized vegetable oil is preferably used, and epoxidized soybean oil is more preferably used.

The content ratio of the other plasticizer(s) (b3) in the plasticizer (b) is not particularly limited, but is preferably 0 mass% or more and 5 mass% or less. When the content ratio of the other plasticizer(s) (b3) in the plasticizer (b) is within the aforementioned range, the vinyl chloride molded product to be formed can be further enhanced in tensile properties (tensile elongation and tensile stress).

The content of the other plasticizer(s) (b3) in the vinyl chloride resin composition is not particularly limited, but may be 0 parts by mass or more and 5 parts by mass or less, with respect to 100 parts by mass of the vinyl chloride resin (a).

The total content of the trimellitic acid ester (b1), the polyester (b2), and the other plasticizer (b3) in the vinyl chloride resin composition (i.e., the content of the plasticizer (b)) is preferably 30 parts by mass or more, more preferably 45 parts by mass or more, still more preferably 65 parts by mass or more, further more preferably 80 parts by mass or more, preferably 200 parts by mass or less, more preferably 155 parts by mass or less, still more preferably 140 parts by mass or less, further more preferably 125 parts by mass or less, with respect to 100 parts by mass of the vinyl chloride resin. When the content of the plasticizer (b) in the vinyl chloride resin composition is within the aforementioned predetermined range, the vinyl chloride resin composition can be further improved in high-temperature powder fluidity, and the resulting vinyl chloride resin molded product can be further enhanced in tensile properties (tensile elongation and tensile stress).

<(c) Cross-linked vinyl chloride resin>

The disclosed vinyl chloride resin composition preferably further includes a cross-linked vinyl chloride resin (c), in addition to the aforementioned vinyl chloride resin (a) and plasticizer (b). In the vinyl chloride resin composition, the cross-linked vinyl chloride resin (c) may serve as a dusting agent (powder flow improver). When the vinyl chloride resin composition further includes the cross-linked vinyl chloride resin (c), the vinyl chloride resin composition can be further improved in powder fluidity (in particular, high-temperature powder fluidity). Further, when the vinyl chloride resin composition further includes the cross-linked vinyl chloride resin (c), the resulting vinyl chloride resin molded product can be made further suppressed to be sticky on the surface thereof.

The cross-linked vinyl chloride resin (c) is a resin obtained by crosslinking a vinyl chloride resin. The cross-linked vinyl chloride resin (c) can be prepared by crosslinking an uncross-linked vinyl chloride resin. Examples of the uncross-linked vinyl chloride resin that can be used as a material for preparing the cross-linked vinyl chloride resin (c) include homopolymers composed of vinyl chloride monomer units and vinyl chloride-based copolymers, which are listed as specific examples for the vinyl chloride resin (a). The crosslinking method of the vinyl chloride resin is not particularly limited, and may be, for example, a method of chemically crosslinking using a known crosslinking agent, or a method of crosslinking by irradiation with radiation such as an electron beam.

As the cross-linked vinyl chloride resin (c), in general, a particulate cross-linked vinyl chloride resin is used. In view of further improving the vinyl chloride resin composition in powder fluidity (in particular, high-temperature powder fluidity), the cross-linked vinyl chloride resin (c) preferably includes cross-linked vinyl chloride resin fine particles, and more preferably consists only of cross-linked vinyl chloride resin fine particles. The cross-linked vinyl chloride resin (c) may contain one kind or two or more kinds of cross-linked vinyl chloride resin fine particles.

Here, the cross-linked vinyl chloride resin fine particles have an average particle diameter which is usually less than 30 $\mu$m, preferably 10 $\mu$m or less, more preferably 5 $\mu$m or less, preferably 0.1 $\mu$m or more, more preferably 1 $\mu$m or more. The reason is that when the average particle diameter of the cross-linked vinyl chloride resin fine particles is equal to or larger than the aforementioned lower limit, the vinyl chloride resin composition can be further improved in powder fluidity (in particular, high-temperature powder fluidity) without being excessively reduced in size as a dusting agent, for example. Another reason is that when the average particle diameter of the cross-linked vinyl chloride resin fine particles is equal to or smaller than the aforementioned upper limit, the vinyl chloride resin composition is enhanced in meltability, and the resulting vinyl chloride resin molded product can be improved in surface smoothness.

The content ratio of the cross-linked vinyl chloride resin (c) in the vinyl chloride resin composition is preferably 0.05 mass% or more, more preferably 0.5 mass% or more, still more preferably 2 mass% or more, further more preferably 3 mass% or more, even further more preferably 4 mass% or more, preferably 15 mass% or less, more preferably 12 mass% or less, still more preferably 10 mass% or less, further more preferably 8 mass% or less, even further more preferably 6 mass% or less. When the content ratio of the cross-linked vinyl chloride resin (c) in the vinyl chloride resin composition is equal to or higher than the aforementioned lower limit, the vinyl chloride resin composition can be further improved in powder fluidity (in particular, high-temperature powder fluidity), and the resulting vinyl chloride resin molded product can be further suppressed to be sticky on the surface thereof. On the other hand, when the content ratio of the cross-linked vinyl chloride resin (c) in the vinyl chloride resin composition is equal to or lower than the aforementioned upper limit, the vinyl chloride resin composition can be ensured to have sufficiently high meltability, and the resulting vinyl chloride resin molded product can have the tensile properties (in particular, tensile elongation) favorably maintained.

The content ratio of the cross-linked vinyl chloride resin (c) in the vinyl chloride resin composition may be 5 mass% or more, 6 mass% or more, or 5 mass% or less, 4 mass% or less.

The content of the cross-linked vinyl chloride resin (c) in the vinyl chloride resin composition is preferably 0.1 parts by mass or more, more preferably 1 part by mass or more, still more preferably 4 parts by mass or more, further more preferably 6 parts by mass or more, even further more preferably 8 parts by mass or more, preferably 30 parts by mass or less, more preferably 27 parts by mass or less, still more preferably 25 parts by mass or less, further more preferably 20 parts by mass or less, even further more preferably 15 parts by mass or less, with respect to 100 parts by mass of the aforementioned the vinyl chloride resin (a). When the content of the cross-linked vinyl chloride resin (c) in the vinyl chloride resin composition is equal to or greater than the aforementioned lower limit with respect to 100 parts by mass of the vinyl chloride resin, the vinyl chloride resin composition can be further improved in powder fluidity (in particular, high-temperature powder fluidity), and the resulting vinyl chloride resin molded product can be suppressed to be sticky on the surface thereof. On the other hand, when the content of the cross-linked vinyl chloride resin (c) in the vinyl chloride resin composition is equal to or smaller than the aforementioned lower limit with respect to 100 parts by mass of the vinyl chloride resin, the vinyl chloride resin composition can be ensured to have sufficiently high meltability, and the resulting vinyl chloride resin molded product can have the tensile properties (in particular, tensile elongation) favorably maintained.

The content of the cross-linked vinyl chloride resin (c) in the vinyl chloride resin composition may be 10 parts by mass or more, may be 12 parts by mass or more, may be 14 parts by mass or more, or may be 14 parts by mass or less, may be 12 parts by mass or less, may be 10 parts by mass or less, with respect the 100 parts by mass of the aforementioned vinyl chloride resin (a).

The cross-linked vinyl chloride resin (c) and the vinyl chloride resin fine particles in the vinyl chloride resin composition are contained in a mass ratio (cross-linked vinyl chloride resin/vinyl chloride resin fine particles) of preferably 1/2 or more, more preferably 1/1 or more, still more preferably 2/1 or more, preferably 20/1 or less, more preferably 15/1 or less, still more preferably 10/1 or less. When the mass ratio (cross-linked vinyl chloride resin/vinyl chloride resin fine particles) of the cross-linked vinyl chloride resin (c) and the vinyl chloride resin fine particles in the vinyl chloride resin composition is equal to or greater than the aforementioned lower limit, the vinyl chloride resin composition can be further improved in high-temperature powder fluidity, and the resulting vinyl chloride resin molded product can be further suppressed to be sticky on the surface thereof. On the other hand, when the mass ratio (cross-linked vinyl chloride resin/vinyl chloride resin fine particles) of the cross-linked vinyl chloride resin (c) and the vinyl chloride resin fine particles in the vinyl chloride resin composition is equal to or less than the aforementioned upper limit, the vinyl chloride resin composition can be ensured to have sufficiently high meltability, and the resulting vinyl chloride resin molded product can have the tensile properties (in particular, tensile elongation) favorably maintained.

The mass ratio (cross-linked vinyl chloride resin/vinyl chloride resin fine particles) of the cross-linked vinyl chloride resin (c) and the vinyl chloride resin fine particles in the vinyl chloride resin composition may be 3/1 or more, may be 7/1 or more, or may be 7/1 or less, may be 3/1 or less.

The total content ratio of the cross-linked vinyl chloride resin (c) and the aforementioned vinyl chloride resin fine particles in the vinyl chloride resin composition is preferably 2.5 mass% or more, more preferably 3.5 mass% or more, still more preferably 4.5 mass% or more, preferably 20 mass% or less, more preferably 15 mass% or less, still more preferably 10 mass% or less. When the total content ratio of the cross-linked vinyl chloride resin (c) and the vinyl chloride resin fine particles in the vinyl chloride resin composition is equal to or greater than the aforementioned lower limit, the vinyl chloride resin composition can be further improved in high-temperature powder fluidity, and the resulting vinyl chloride resin molded product can be further suppressed to be sticky on the surface thereof. On the other hand, when the total content ratio of the cross-linked vinyl chloride resin (c) and the vinyl chloride resin fine particles in the vinyl chloride resin composition is equal to or less than the aforementioned upper limit, the resulting vinyl chloride resin molded product can have the tensile properties (in particular, tensile elongation) favorably maintained.

The content of the cross-linked vinyl chloride resin (c) in the vinyl chloride resin composition is preferably 0.1 parts by mass or more, more preferably 1 part by mass or more, still more preferably 4 parts by mass or more, further more preferably 6 parts by mass or more, even further more preferably 8 parts by mass or more, preferably 30 parts by mass or less, more preferably 27 parts by mass or less, still more preferably 25 parts by mass or less, further more preferably 18 parts by mass or less, even further more preferably 13 parts by mass or less, with respect to 100 parts by mass of the aforementioned plasticizer (b). When the content of the cross-linked vinyl chloride resin (c) in the vinyl chloride resin composition is equal to or greater than the aforementioned lower limit with respect to 100 parts by mass of the plasticizer (b), the vinyl chloride resin composition can be further improved in powder fluidity (in particular, high-temperature powder fluidity), and the resulting vinyl chloride resin molded product can be further suppressed to be sticky on the surface thereof. On the other hand, when the content of the cross-linked vinyl chloride resin (c) in the vinyl chloride resin composition is equal to or less than the aforementioned upper limit with respect to 100 parts by mass of the plasticizer (b), the vinyl chloride resin composition can be ensured to have sufficiently high meltability, and the resulting vinyl chloride resin molded product can have the tensile properties (in particular, tensile elongation) favorably maintained.

The content of the cross-linked vinyl chloride resin (c) in the vinyl chloride composition may be 10 parts by mass or more, may be 12 parts by mass or more, may be 13 parts by mass or more, or may be 13 parts by mass or less, may be 12 parts by mass or less, may be 10 parts by mass or less, with respect to 100 parts by mass of the aforementioned plasticizer (b).

<Additives>

The disclosed vinyl chloride resin composition may further contain various additives, in addition to the components set forth above. Examples of the additives include, but are not limited to, lubricants; stabilizers such as perchloric acid-treated hydrotalcite, zeolite, β-diketone, and fatty acid metal salts; mold release agents; dusting agents other than the aforementioned vinyl chloride resin fine particles; impact modifiers; perchloric acid compounds (such as sodium perchlorate, potassium perchlorate, and the like) other than perchloric acid-treated hydrotalcite; antioxidants; fungicides; flame retardants; antistatic agents; fillers; light stabilizers; blowing agents; pigments; and the like.

As the aforementioned additives that the disclosed vinyl chloride resin composition may contain, for example, the additives described in WO 2016/098344 A1 may also be used, and the preferred content thereof may be the same as that described in WO 2016/098344 A1.

The vinyl chloride resin composition may contain, for example, silicone oil as an additive other than those described above.

Silicone oil is a component capable of further improving the vinyl chloride resin composition in high-temperature powder fluidity and suppressing stickiness on a surface of the resulting vinyl chloride resin molded product. As the silicone oil, unmodified silicone oil and modified silicone may whichever be used.

The disclosed vinyl chloride resin composition satisfies at least one of two predetermined conditions regarding the tetrahydrofuran-insoluble content ratio to be described later, and therefore, has no need to include silicone oil to form a vinyl chloride resin molded product which can exhibit sufficiently excellent high-temperature powder fluidity and is further suppressed to be sticky on the surface thereof.

Further, the disclosed vinyl chloride resin composition, when further including the cross-linked vinyl chloride resin (c) described above, has no need to include silicone oil to form a vinyl chloride resin molded product which can exhibit further excellent high-temperature powder fluidity and is further suppressed to be sticky on the surface thereof.

The content of the uracil compound in the vinyl chloride resin composition can be appropriately adjusted to the extent that the desired effect anticipated by the present disclosure can be obtained.

The total content ratio of the additives in the vinyl chloride resin composition can be appropriately adjusted to the extent that the desired effect anticipated by the present disclosure can be obtained, and can be, for example, 0 mass% or more and 10 mass% or less.

<Tetrahydrofuran-insoluble content ratio in vinyl chloride resin composition>

The disclosed vinyl chloride resin composition needs to satisfy at least one of the following (1) and (2).

(1) The tetrahydrofuran-insoluble content ratio is 10 mass% or more.

(2) The ratio between the tetrahydrofuran-insoluble content ratio and the content ratio of the plasticizer (tetrahydrofuran-insoluble content ratio/plasticizer content ratio) is 0.20 or more.

When the vinyl chloride resin composition satisfies at least one of (1) and (2) above, the vinyl chloride resin composition is improved in high-temperature powder fluidity, though the reason is unclear.

The disclosed vinyl chloride resin composition may satisfy only (1) above or may satisfy only (2) above, but in view of further improving the high-temperature powder fluidity, (1) and (2) above may both be preferably satisfied.

When the disclosed vinyl chloride resin composition satisfies (1) above, the tetrahydrofuran-insoluble content ratio in the vinyl chloride resin composition needs to be 10 mass% or more, preferably 10.5 mass% or more, more preferably 11 mass% or more, still more preferably 11.5 mass% or more, further more preferably 12 mass% or more, even further more preferably 12.5 mass% or more, particularly preferably 13 mass% or more, preferably 20 mass% or less, more preferably 18 mass% or less, still more preferably 17 mass% or less, further more preferably 16 % by mass or less, even further more preferably 15 mass% or less, particularly preferably 14.6 mass% or less. When the tetrahydrofuran-insoluble content ratio in the vinyl chloride resin composition is equal to or higher than the aforementioned lower limit, the vinyl chloride resin composition can be improved in powder fluidity (particularly, the high-temperature powder fluidity). In addition, when the tetrahydrofuran-insoluble content ratio in the vinyl chloride resin composition is equal to or higher than the aforementioned lower limit, the resulting vinyl chloride resin molded product can be further suppressed to be sticky on the surface thereof. On the other hand, when the tetrahydrofuran-insoluble content ratio in the vinyl chloride resin composition is equal to or lower than the aforementioned upper limit, the vinyl chloride resin composition can be ensured to have sufficiently high meltability, and the resulting vinyl chloride resin molded product can have the tensile properties (in particular, tensile elongation) favorably maintained.

The tetrahydrofuran-insoluble content ratio in the vinyl chloride resin composition may be 14% by mass or less, or 14% by mass or more.

The tetrahydrofuran-insoluble content ratio in the vinyl chloride resin composition can be adjusted by changing the amount of each component (e.g., the vinyl chloride resin (a), the plasticizer (b), and the cross-linked vinyl chloride resin (c)) used in the preparation of the vinyl chloride resin composition.

When the disclosed vinyl chloride resin composition satisfies (2) above, the ratio between the tetrahydrofuran-insoluble content ratio in the vinyl chloride resin composition and the content ratio of the plasticizer (tetrahydrofuran-insoluble content ratio/plasticizer content ratio) needs to be 0.20 or more, preferably 0.22 or more, more preferably 0.23 or more, still more preferably 0.24 or more, further more preferably 0.25 or more, even further more preferably 0.26 or more, particularly preferably 0.272 or more, preferably 0.50 or less, more preferably 0.45 or less, still more preferably 0.40 or less, further more preferably 0.35 or less, even further more preferably 0.32 or less, particularly preferably 0.305 or less. When the ratio between the tetrahydrofuran-insoluble content ratio in the vinyl chloride resin composition and the content ratio of the plasticizer (tetrahydrofuran-insoluble content ratio/plasticizer content ratio) is equal to or higher than the aforementioned lower limit, the vinyl chloride resin composition can be improved in powder fluidity (in particular the high-temperature powder fluidity). In addition, when the ratio between the tetrahydrofuran-insoluble content ratio in the vinyl chloride resin composition and the content ratio of the plasticizer (tetrahydrofuran-insoluble content ratio/plasticizer content ratio) is equal to or higher than the aforementioned lower limit, the resulting vinyl chloride resin molded product can be further suppressed to be sticky on the surface thereof. On the other hand, when the ratio between the tetrahydrofuran-insoluble content ratio in the vinyl chloride resin composition and the content ratio of the plasticizer (tetrahydrofuran- insoluble content ratio/plasticizer content ratio) is equal to or less than the aforementioned upper limit, the vinyl chloride resin composition can be ensured to have sufficiently high meltability, and the resulting vinyl chloride resin molded product can have the tensile properties (in particular, tensile elongation) favorably maintained.

The tetrahydrofuran-insoluble content ratio in the vinyl chloride resin composition and the content ratio of the plasticizer (tetrahydrofuran-insoluble content ratio/plasticizer content ratio) may be 0.30 or less, or may be 0.30 or more.

<Production method of vinyl chloride resin composition>

The disclosed vinyl chloride resin composition can be produced by mixing the components described above. The use amount of each component described above can be appropriately adjusted so that the vinyl chloride resin composition to be prepared can satisfy at least one of the two predetermined conditions.

Here, the method of mixing the vinyl chloride resin (a), the plasticizer (b), and the cross-linked vinyl chloride resin (c), with various additives to be further blended as necessary, is not particularly limited, and for example, a method of mixing, by dry blending, components other than the dusting agent (including vinyl chloride resin fine particles and the cross-linked vinyl chloride resin (c) as an optional component), and thereafter adding and mixing the dusting agent thereinto. Here, a Henschel mixer may preferably be used for the dry blending. The temperature during the dry blending is not particularly limited, and preferably 50 °C or higher, more preferably 70 °C or higher, and preferably 200 °C or lower.

<Use of vinyl chloride resin composition>

The obtained vinyl chloride resin composition can be suitably used for powder molding, and can be further suitably used for powder-slush molding.

(Vinyl chloride resin molded product)

The disclosed vinyl chloride resin molded product can be obtained by molding the vinyl chloride resin composition set forth above by any method. The disclosed vinyl chloride resin molded product, which is formed using the aforementioned vinyl chloride resin composition, usually contains at least the vinyl chloride resin (a) and the plasticizer (b), and optionally further includes the cross-linked vinyl chloride resin (c) and various additives. Further, the disclosed vinyl chloride resin molded product, which is formed by using a vinyl chloride resin composition excellent in high-temperature powder fluidity, has little unevenness in thickness and density. Further, the disclosed vinyl chloride resin molded product, which is formed by using the aforementioned vinyl chloride resin composition, is suppressed to be sticky on the surface thereof.

Therefore, a laminate formed by lining the disclosed vinyl chloride resin molded product with a foamed polyurethane molded product can be suitably used as an automobile interior material such as a surface skin of an automobile instrument panel.

<Method of forming vinyl chloride resin molded product>

In forming a vinyl chloride resin molded product by powder-slush molding, the mold temperature is not particularly limited, and preferably 200 °C or higher, more preferably 220 °C or higher, preferably 300°C or lower, more preferably 280 °C or lower.

The following method, for example, may be used in producing the vinyl chloride resin molded product without any specific limitations. In this method, the disclosed vinyl chloride resin composition is sprinkled onto a mold having a temperature within any of the ranges set forth above, which is left for 5 seconds or more and 30 seconds or less to shake off any excess of the vinyl chloride resin composition, and is then further left for 30 seconds or more and 3 minutes or less at any temperature. Thereafter, the mold is subsequently cooled to 60 °C or lower and 10 °C or higher, and the disclosed vinyl chloride resin molded product thus obtained is removed from the mold. Thus, obtained is a sheet-like molded product that is in the shape of the mold.

(Laminate)

The disclosed laminate includes a foamed polyurethane molded product and the aforementioned vinyl chloride resin molded product. The vinyl chloride resin molded product typically constitutes one surface of the laminate.

Then, the disclosed laminate is preferably used as an automobile interior component, in particular, an automobile interior material forming an automobile instrument panel.

The method for stacking the foamed polyurethane molded product and the vinyl chloride resin molded product is not specifically limited, and may use, for example, a method such as those described in below. Such methods include: (1) a method of separately preparing a foamed polyurethane molded product and a vinyl chloride resin molded product and bonding the same through heat fusion, heat bonding, or the use of a known adhesive or the like; and (2) a method of performing polymerization by reacting an isocyanate and a polyol or the like as a raw material of a foamed polyurethane molded product on a vinyl chloride resin molded product while foaming polyurethane by a known method, to thereby directly form a foamed polyurethane molded product on a vinyl chloride resin molded product. Of those, the latter method (2) is more suitable because the process is simple, and is capable of readily achieving strong adhesion between the vinyl chloride resin molded product and the foamed polyurethane molded product even when obtaining laminates of various different shapes.

EXAMPLES

The following provides a more specific description of the present disclosure based on Examples. However, the present disclosure is not limited to Examples in below. In the following description, "%" and "parts" used in expressing quantities are by mass, unless otherwise specified.

The "content ratio of the plasticizer" in the vinyl chloride resin composition usually corresponds to the ratio of the used amount of the plasticizer to the total amount of the components used for preparing the vinyl chloride resin composition, unless otherwise specified.

Then, the ordinary-temperature powder fluidity, high-temperature powder fluidity, meltability, and tetrahydrofuran-insoluble content ratio in the vinyl chloride resin composition, and the tensile stress, tensile elongation, and dynamic friction coefficient of the vinyl chloride resin molded sheet were measured and evaluated by the following method.

<Ordinary-temperature powder fluidity>

The vinyl chloride resin composition obtained in Examples and Comparative Examples were used to measure the bulk density based on the weight held in a 100mL container, using the bulk specific gravity measurement device described in JIS-K-6720. The resulting powder of the vinyl chloride resin composition left in the 100 mL container was returned to the bulk specific gravity measuring device and the damper was immediately opened, so as to measure the time it takes from the opening of the damper until all the powder flowed out, to thereby determine the duration of the falling in the unit of second. When it took more than 1 minute to see the powder to completely flow out, it was determined as "no flow". All of the above operations were performed at ordinary temperature (23 °C). When the duration of the falling in the unit of second is shorter, that means the vinyl chloride resin composition is more excellent in powder fluidity under ordinary temperature condition (i.e., ordinary-temperature powder fluidity).

<High-temperature powder fluidity>

The vinyl chloride resin compositions obtained in Examples and Comparative Examples were placed in a tray and heated in an oven at 80 °C for 2 hours. After the heating, the vinyl chloride resin composition was taken out of the oven, and then stirred with a medicine spoon to have it air-cooled at room temperature. At this time, the temperature of the powder of the vinyl chloride resin composition was measured, and an appropriate amount of the powder was taken out each time when the temperature reached respective temperatures of 60 °C, 50 °C, 40 °C, and 30 °C, and the bulk density of the vinyl chloride resin composition was measured based on the weight held in a 100 mL container, using the bulk specific gravity measuring device described in JIS-K-6720. The resulting powder of the vinyl chloride resin composition left in the 100 mL container was returned to the bulk specific gravity measuring device and the damper was immediately opened, so as to measure the time it takes from the opening of the damper until all the powder flowed out, to thereby determine the duration of the falling in the unit of second. When it took more than 1 minute to see the powder to completely flow out, it was determined as "no flow". When the duration of the falling in the unit of second is shorter, that means the vinyl chloride resin composition is more excellent in powder fluidity under high- temperature condition (i.e., high-temperature powder fluidity).

<Meltability>

The melting temperatures of the vinyl chloride resin compositions obtained in Examples and Comparative Examples were measured using a heated mold. Specifically, the mold placed on a hot plate heated in a stepwise manner at equal intervals in a range of 170 °C to 270 °C, to thereby obtain a stepwisely-heated mold of 300 mm in length $\times$ 60 mm in width $\times$ 4 mm in depth. Then, the mold temperature was measured at five points at intervals of 50 mm from the mold end in the longitudinal direction of the mold and recorded, and the measured temperatures were set as temperature measurement points. Thereafter, the vinyl chloride resin composition was sprinkled to a thickness of 1 mm onto the mold heated in a stepwise manner as described above, and left for 45 seconds to be melted. Next, an excess of the vinyl chloride resin composition was shaken off, and the mold was cooled with water to obtain a vinyl chloride resin molded sheet in which the vinyl chloride resin was molded into a belt shape. Thereafter, a landmark was written at each position on the vinyl chloride resin molded sheet corresponding to the respective temperature measurement points at the five points at which the mold temperature was measured, and then the sheet was removed from the mold. The surface of the vinyl chloride resin molded sheet removed from the mold was visually observed to identify a location where the vinyl chloride resin composition was melted, as a melting point. Of the two temperature measurement points across the melting point, the mold temperature measured at the temperature measurement point on the higher temperature side was defined as the high temperature side mold temperature MLDH [°C], the mold temperature measured at the temperature measurement point on the lower temperature side was defined as the low temperature side mold temperature MLDL [°C], and the distance from the temperature measurement point on the lower temperature side to the melting point was defined as TML [mm]. Then, the following equation was used to calculate the temperature of the melting point, that is, the melting temperature TM [°C] of the vinyl chloride resin composition.

$$\text{Melting temperature } TM = (MLDH - MLDL) \times (TML/50) + MLDL \ [°C]$$

TM: Melting temperature [°C]

MLDH: Mold temperature [°C] on the higher temperature side
MLDL: Mold temperature [°C] on the lower temperature side
TML: Distance [mm] from the temperature measurement point on the lower temperature side to the melting point

The melted location (melting point) was judged to be a location at which the resulting vinyl chloride resin molded sheet has a smooth surface was smooth without any residual particulate form. When the melting temperature is lower, that means the vinyl chloride resin composition is more excellent in meltability.

<Tetrahydrofuran-insoluble content ratio>

A vinyl chloride resin molded product (vinyl chloride resin molded sheet) was cut out by about 0.3 g, which was finely chopped and placed in a 100 mL glass bottle, which was precisely weighed to determine the mass of the sample. The measured sample after the weighing was added with 90 mL of tetrahydrofuran (THF), which was allowed to stand for 24 hours to melt the sample. One sheet of glass-fiber filter paper "GF-75 $\varphi$110 mm" produced by ADVANTECH CO., LTD. was taken out and weighed precisely, to determine the mass of the filter paper prior to the test. Using that filter paper, the THF solution in which the measurement samples were dissolved was filtered under reduced pressure, and the filter paper after the filtration was dried in an oven at 40 °C for 3 hours. The mass of the filter paper after drying was precisely weighed to determine the mass of the filter paper after the test. Then, the THF-insoluble content ratio in the vinyl chloride resin composition was determined by the following equation.

$$\text{THF-insoluble content ratio} = (\text{the mass of the filter paper after the test}$$
$$- \text{the mass of filter paper before the test})/\text{mass of the sample}$$

<Tensile stress and tensile elongation>

The resulting vinyl chloride resin molded sheet was punched with a No. 1 dumbbell described in JIS K6251, and the tensile stress at break (MPa) and the tensile elongation at break (%) were measured at a tensile rate 200 mm/minute in accordance with JIS K7113, under the respective temperature conditions of ordinary temperature (23 °C) and low temperature (-10 °C). When the tensile elongation at break is greater in value, that means the vinyl chloride resin molded sheet is more excellent in tensile elongation.

<Dynamic friction coefficient>

The vinyl chloride resin molded product was measured for the dynamic friction coefficient as follows, and the surface stickiness thereof was evaluated.
Specifically, using a texture tester (product name "TL201Ts", produced by TRINITY LABO. (TRINITY TECHNOLOGY Inc.)) under a measuring environment of 23 °C at a relative humidity of 50 %, the tactile contact was brought into contact with the vinyl chloride resin molded sheet prior to the formation of the laminate, under the following conditions: a load: 50 g, a rate: 10 mm/seconds, a test range: 50 mm, a measurement range: 30 mm excluding each 10 mm before and after the test range, to thereby measure the dynamic friction coefficient on the surface of the sheet. When the value of the dynamic friction coefficient is smaller, that means the vinyl chloride resin molded product is further suppressed to be sticky on the surface thereof.

(Production Examples)

The polyesters used in Examples and Comparative Examples were prepared as follows.

<Polyester A>

Adipic acid as a polyvalent carboxylic acid, 3-methyl-1,5-pentanediol as a polyhydric alcohol, and 2-ethylhexanol as a stopper (terminal stop component) were charged into a reaction vessel, which was added with tetraisopropyl titanate as a catalyst. The vessel was heated while being stirred and added with a solvent as appropriate. Water as a byproduct was removed at atmospheric pressure and reduced pressure, and the temperature was finally raised to 220 °C to 230 °C to complete the dehydration condensation reaction. The resulting product was subjected to thin-film distillation under conditions of a pressure of 4 Pa to 80Pa and a mantle temperature of 250°C, to thereby obtain Polyester A having 2-ethylhexoxy groups at the terminals (viscosity: 3600 mPa·s, number average molecular weight: 5300, acid value: 0.32 mgKOH/g, and hydroxyl value: 12.7 mgKOH/g).

(Example 1)

<Preparation of vinyl chloride resin composition>

Of the compounding components of Table 1, components other than the plasticizer (trimellitic acid ester, Polyester A, and epoxidized soybean oil) and the cross-linked vinyl chloride resin fine particles serving as a dusting agent were charged in a Henschel mixer and mixed. When the temperature of the mixture was reached to 80 °C, the plasticizers were all added, and dried up (which refers to a state in which the mixture was made powdery as the plasticizers were absorbed by the vinyl chloride resin particles as the vinyl chloride resin). Thereafter, once the dried-up mixture had been cooled to a temperature of 70 °C or lower, the cross-linked vinyl chloride resin fine particles to serve as the dusting agent were added to the mixture to yield a vinyl chloride resin composition.
The obtained vinyl chloride resin composition was used to measure and evaluate ordinary-temperature powder flowability, high-temperature powder flowability, and meltability according to the aforementioned method. The results are in Table 1.

<Formation of vinyl chloride resin molded product>

The vinyl chloride resin composition obtained as above was sprinkled on a textured mold heated to a temperature of 250 °C and allowed to melt for an arbitrary period of time, and then an excess of the vinyl chloride resin composition was shaken off. Thereafter, the textured mold sprinkled with the vinyl chloride resin composition was placed at rest in an oven set to a temperature of 200 °C, and once 60 seconds had passed after being placed at rest, the textured mold was cooled with cooling water. Once the mold had cooled to 40 °C, a vinyl chloride resin molded sheet of 145 mm × 175 mm × 1 mm was removed from the mold, as the vinyl chloride resin molded product.
Then, the obtained vinyl chloride resin molded sheet was used to measure and evaluate the tetrahydrofuran-insoluble content ratio, the tensile stress, the tensile elongation, and the dynamic friction coefficient, according to the aforementioned methods. The results are in Table 1.

(Examples 2 to 4)

As indicated in Table 1, a vinyl chloride resin composition and a vinyl chloride resin molded product were prepared in the same manner as in Example 1, except that a part of the cross-linked vinyl chloride resin fine particles was replaced with uncross-linked vinyl chloride resin fine particles. Measurement and evaluation were carried out in the same manner as in Example 1. The results are in Table 1.

(Example 5)

A vinyl chloride resin composition and a vinyl chloride resin molded product were prepared in the same manner as in Example 2, except that the added amount of Polyester A as the plasticizer was increased as indicated in Table 1. Measurement and evaluation were carried out in the same manner as in Example 1. The results are in Table 1.

(Example 6)

As indicated in Table 1, a vinyl chloride resin composition and a vinyl chloride resin molded product were prepared in the same manner as in Example 2, except that, as the plasticizer, the added amount of Polyester A was increased, without using a trimellitic acid ester. Then, measurement and evaluation were carried out in the same manner as in Example 1 except that the meltability of the vinyl chloride resin composition was not evaluated. The results are in Table 1.

(Comparative Example 1)

As indicated in Table 1, a vinyl chloride resin composition and a vinyl chloride resin molded product were prepared in the same manner as in Example 1, except that all of the cross-linked vinyl chloride resin fine particles were replaced with uncross-linked vinyl chloride resin fine particles, and unmodified silicone oil was further added by 0.4 parts by mass. Measurement and evaluation were carried out in the same manner as in Example 1. The results are in Table 1.

(Comparative Example 2)

A vinyl chloride resin composition and a vinyl chloride resin molded product were prepared in the same manner as in Comparative Example 1, except that 0.4 parts by mass of the unmodified silicone oil was not added. Measurement and evaluation were carried out in the same way as in Example 1. The results are in Table 1.

(Comparative Example 3)

A vinyl chloride resin composition and a vinyl chloride resin molded product were prepared in the same manner as in Comparative Example 2, except that the type of the uncross-linked vinyl chloride resin fine particles was changed as indicated in Table 1. Measurement and evaluation were carried out in the same way as in Example 1. The results are in Table 1.

[Table 1]

| | | Comparative Example 1 | Example 1 | Example 2 | Example 3 | Example 4 | Comparative Example 2 | Comparative Example 3 | Example 5 | Example 6 |
|---|---|---|---|---|---|---|---|---|---|---|
| Composition | Vinyl chloride resin — Vinyl chloride resin particles[1] [parts by mass] | 100 | 100 | 100 | 100 | 100 | 100 | 100 | 100 | 100 |
| | Vinyl chloride resin fine particles[2] [parts by mass] | 16 | 0 | 2 | 4 | 8 | 16 | 0 | 2 | 2 |
| | Vinyl chloride resin fine particles[3] [parts by mass] | 0 | 0 | 0 | 0 | 0 | 0 | 16 | 0 | 0 |
| | Cross-linked vinyl chloride resin — Cross-linked vinyl chloride resin fine particles[4] [parts by mass] | 0 | 16 | 14 | 12 | 8 | 0 | 0 | 14 | 14 |
| | Plasticizer — Trimellitic acid ester[5] [parts by mass] | 30 | 30 | 30 | 30 | 30 | 30 | 30 | 30 | 0 |
| | Polyester plasticizer A [parts by mass] | 80 | 80 | 80 | 80 | 80 | 80 | 80 | 100 | 110 |
| | Other plasticizer (epoxidized soya oil)[6] [parts by mass] | 5 | 5 | 5 | 5 | 5 | 5 | 5 | 5 | 5 |
| | Stabilizer — Perchloric acid-treated hydrotalcite[7] [parts by mass] | 4.5 | 4.5 | 4.5 | 4.5 | 4.5 | 4.5 | 4.5 | 4.5 | 4.5 |
| | Zeolite[8] [parts by mass] | 2.4 | 2.4 | 2.4 | 2.4 | 2.4 | 2.4 | 2.4 | 2.4 | 2.4 |
| | Stearoyl benzoyl methane (β-diketone)[9] [parts by mass] | 1 | 1 | 1 | 1 | 1 | 1 | 1 | 1 | 1 |
| | Zinc stearate[10] [parts by mass] | 0.2 | 0.2 | 0.2 | 0.2 | 0.2 | 0.2 | 0.2 | 0.2 | 0.2 |
| | Mold release agent — 12-Hydroxystearic acid[11] [parts by mass] | 0.2 | 0.2 | 0.2 | 0.2 | 0.2 | 0.2 | 0.2 | 0.2 | 0.2 |
| | Silicone oil — Unmodified silicone oil[12] [parts by mass] | 0.4 | 0 | 0 | 0 | 0 | 0 | 0 | 0 | 0 |
| | Pigment — Black[13] [parts by mass] | 1.1 | 1.1 | 1.1 | 1.1 | 1.1 | 1.1 | 1.1 | 1.1 | 1.1 |
| | Sum (total amount of vinyl chloride resin composition) [parts by mass] | 240.8 | 240.4 | 240.4 | 240.4 | 240.4 | 240.4 | 240.4 | 260.4 | 240.4 |
| | Content of cross-linked vinyl chloride resin fine particles [mass%] | 0.00 | 6.66 | 5.82 | 4.99 | 3.33 | 0.00 | 0.00 | 5.38 | 5.82 |
| | Content of cross-linked vinyl chloride resin fine particles to 100 parts by mass of vinyl chloride resin [parts by mass] | 0.00 | 16.00 | 13.73 | 11.54 | 7.41 | 0.00 | 0.00 | 13.73 | 13.73 |
| | Content of cross-linked vinyl chloride resin fine particles to 100 parts by mass of plasticizer [parts by mass] | 0.00 | 13.91 | 12.17 | 10.43 | 6.96 | 0.00 | 0.00 | 10.37 | 12.17 |
| | Cross-linked vinyl chloride resin fine particles/vinyl chloride resin fine particles | 0.00 | — | 7.00 | 3.00 | 1.00 | 0.00 | 0.00 | 7.00 | 7.00 |
| | Total content ratio of cross-linked vinyl chloride resin fine particles and vinyl chloride resin fine particles [mass%] | 6.64 | 6.66 | 6.66 | 6.66 | 6.66 | 6.66 | 6.66 | 6.14 | 6.66 |
| | Tetrahydrofuran-insoluble content ratio [mass%] | 8.9 | 14.6 | 14.6 | 13.0 | 11.0 | 8.5 | 8.5 | 12.2 | 12.4 |
| | Content ratio of plasticizer [mass%] | 47.8 | 47.8 | 47.8 | 47.8 | 47.8 | 47.8 | 47.8 | 51.8 | 47.8 |
| | Tetrahydrofuran-insoluble content ratio/plasticizer content ratio | 0.186 | 0.305 | 0.305 | 0.272 | 0.230 | 0.178 | 0.178 | 0.236 | 0.259 |
| Evaluation | Ordinary-temperature powder fluidity — Duration of falling [second] | 14.2 | 12.6 | 13.5 | 13.4 | 13.5 | 14.0 | 12.8 | 12.6 | 13.4 |
| | Bulk density [g/cm³] | 0.59 | 0.59 | 0.60 | 0.60 | 0.59 | 0.58 | 0.61 | 0.58 | 0.60 |
| | High-temperature powder fluidity — Duration of falling [second] — 60 °C | 33.8 | 12.0 | 14.4 | 16.4 | 21.1 | No fall | 43.7 | No fall | 15.0 |
| | 50 °C | 23.3 | 11.8 | 13.9 | 15.9 | 20.5 | No fall | 42.8 | No fall | 14.6 |
| | 40 °C | 24.3 | 11.8 | 13.3 | 14.4 | 17.3 | 35.5 | 18.0 | 15.4 | 14.3 |
| | 30 °C | 27.0 | 11.6 | 12.7 | 13.8 | 17.0 | 25.5 | 12.6 | 14.8 | 13.3 |
| | 23 °C | 29.9 | 11.3 | 12.7 | 13.4 | 17.8 | 19.8 | 12.1 | 13.0 | 13.3 |
| | Meltability [°C] | 226 | 251 | 243 | 235 | 229 | 225 | Not melted (260 °C of higher) | 238 | ... |
| | Tensile stress at break [MPa] — 23 °C | 9.9 | 6.4 | 7.0 | 7.2 | 7.7 | 10.2 | 10.8 | 5.9 | 7.2 |
| | -10 °C | 16.5 | 12.6 | 13.6 | 13.7 | 14.6 | 18.0 | 16.6 | 11.5 | 13.9 |
| | Tensile elongation at break [%] — 23 °C | 367 | 231 | 250 | 251 | 265 | 373 | 377 | 268 | 255 |
| | -10 °C | 243 | 152 | 178 | 186 | 205 | 248 | 247 | 227 | 169 |
| | Dynamic friction coefficient | 0.58 | 0.45 | 0.53 | 0.62 | 0.75 | 1.07 | 0.88 | 0.66 | 0.56 |

1) Product name "ZEST® 1700ZI" (ZEST is a registered trademark in Japan, other countries, or both) (prepared by suspension polymerization method, average degree of polymerization: 1700, average particle diameter: 129 μm), produced by SHINDAI-ICHI VINYL CORPORATION.
2) Product name "ZEST® PQLTX" (prepared by emulsion polymerization method, average degree of polymerization:

800, average particle diameter: 1.8 μm), produced by SHINDAI-ICHI VINYL CORPORATION.

3) Product name "LEURON PASTE® 960" (LEURON PASTE is a registered trademark in Japan, other countries, or both), produced by Tosoh Corporation (prepared by an emulsion polymerization method, average degree of polymerization: 4500, average particle diameter: 1.8 μm)

4) Product name "LEURON PASTE® AD50", produced by Tosoh Corporation (prepared by emulsion polymerization method, mean particle diameter: 1.7 μm)

5) Product name "TRIMEX N-08", produced by Kao Corporation

6) Product name "ADK CIZER® O-130S" (ADK CIZER is a registered trademark in Japan, other countries, or both), produced by ADEKA Corporation

7) Product name "ALCAMIZER® 5" (ALCAMIZER is a registered trademark in Japan, other countries, or both), produced by Kyowa Chemical Industry Co., Ltd.

8) Product name "MIZUKALIZER® DS" (MIZUKALIZER is a registered trademark in Japan, other countries, or both), produced by Mizusawa Industrial Chemicals, Ltd.

9) Product name "KARENZ® DK-1" (KARENZ is a registered trademark in Japan, other countries, or both), produced by SHOWA DENKO K.K.

10) Product name "SAKAI SZ2000", produced by Sakai Chemical Industry Co., Ltd.

11) Product name "ADK STAB® LS-12" (ADK STAB is a registered trademark in Japan, other countries, or both), produced by ADEKA Corporation

12) Product name "KF-96H-0.3 million cs", produced by Shin-Etsu Chemical Co., Ltd. Silicone Division (unmodified silicone oil (polydimethylsiloxane), viscosity: $3 \times 10^4$cs)

13) Product name "DA PX 1720(A) Black", produced by Dainichiseika Color and Chemicals Mfg. Co., Ltd.

As can be seen from Table 1, the vinyl chloride resin compositions of Examples 1 to 6, which contain a vinyl chloride resin and a plasticizer, and satisfy at least one of the two predetermined conditions related to the tetrahydrofuran-insoluble content ratio, are superior in high-temperature powder fluidity as compared with the vinyl chloride resin compositions of Comparative Examples 1 to 3, which do not satisfy any of the two predetermined conditions.

INDUSTRIAL APPLICABILITY

According to the present disclosure, a vinyl chloride resin composition excellent in high-temperature powder fluidity can be provided.

According to the present disclosure, a vinyl chloride resin molded product formed using the vinyl chloride resin composition can also be provided.

According to the present disclosure, a laminate including the vinyl chloride resin molded product can further be provided.

**Claims**

1. A vinyl chloride resin composition comprising a vinyl chloride resin and a plasticizer, the composition satisfying at least one of:

   (1) a tetrahydrofuran-insoluble content ratio being 10 mass% or more; and
   (2) a ratio between the tetrahydrofuran-insoluble content ratio and a content ratio of the plasticizer (tetrahydrofuran-insoluble content ratio/plasticizer content ratio) being 0.20 or more.

2. The vinyl chloride resin composition according to claim 1, further comprising a cross-linked vinyl chloride resin.

3. The vinyl chloride resin composition according to claim 2, wherein the cross-linked vinyl chloride resin is contained at 0.05 mass% or more and 15 mass% or less.

4. The vinyl chloride resin composition according to claim 2 or 3, wherein the cross-linked vinyl chloride resin is contained at 0.1 parts by mass or more and 30 parts by mass or less with respect to 100 parts by mass of the vinyl chloride resin.

5. The vinyl chloride resin composition according to any one of claims 2 to 4, wherein:

   the vinyl chloride resin includes vinyl chloride resin particles and vinyl chloride resin fine particles;

the cross-linked vinyl chloride resin and the vinyl chloride resin fine particles are contained in a mass ratio (cross-linked vinyl chloride resin/vinyl chloride resin fine particles) of 1/2 or more and 20/1 or less.

6. The vinyl chloride resin composition according to any one of claims 1 to 5, wherein the plasticizer includes at least one of trimellitic acid ester and polyester.

7. The vinyl chloride resin composition according to any one of claims 1 to 6, wherein:

   the plasticizer includes trimellitic acid ester and polyester; and
   the trimellitic acid ester and the polyester are contained in a mass ratio (trimellitic acid ester/polyester) of 1/9 or more and 9/1 or less.

8. The vinyl chloride resin composition according to any one of claims 1 to 7, wherein the plasticizer is contained at 30 parts by mass or more and 200 parts by mass or less with respect to 100 parts by mass of the vinyl chloride resin.

9. The vinyl chloride resin composition according to any one of claims 1 to 8, to be used for powder molding.

10. The vinyl chloride resin composition according to any one of claims 1 to 9, to be used for powder-slush molding.

11. A vinyl chloride resin molded product obtainable through molding of the vinyl chloride resin composition according to any one of claims 1 to 10.

12. The vinyl chloride resin molded product according to claim 11, for use in an automobile instrument panel surface skin.

13. A laminate having a foamed polyurethane molded product and the vinyl chloride resin molded product according to claims 11 or 12.

14. The laminate according to claim 13, for use in an automobile instrument panel.

## INTERNATIONAL SEARCH REPORT

International application No.

**PCT/JP2022/011717**

**A.  CLASSIFICATION OF SUBJECT MATTER**

*B29C 41/18*(2006.01)i; *B29K 27/06*(2006.01)n; *B29L 9/00*(2006.01)n; *B29L 31/58*(2006.01)n; *B32B 5/22*(2006.01)i; *B32B 27/30*(2006.01)i; *B32B 27/40*(2006.01)i; *C08K 5/10*(2006.01)i; *C08L 27/06*(2006.01)i; *C08L 67/02*(2006.01)i; *B29C 44/00*(2006.01)i

FI:  C08L27/06; B29C41/18; B29C44/00 A; B32B5/22; B32B27/30 101; B32B27/40; C08L67/02; C08K5/10; B29K27:06; B29L31:58; B29L9:00

According to International Patent Classification (IPC) or to both national classification and IPC

**B.  FIELDS SEARCHED**

Minimum documentation searched (classification system followed by classification symbols)

B29C41/00-41/36; B29C41/46-41/52; B29K27/06; B29L9/00; B29L31/58; B32B5/00-5/32; B32B27/00-27/42; C08K3/00-13/08; C08L27/00-27/24; C08L67/00-67/08; B29C44/00-44/60

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| Y | WO 2019/087534 A1 (KANEKA CORP.) 09 May 2019 (2019-05-09)<br>claims, paragraphs [0016], [0026]-[0032], [0050]-[0053], examples | 1-14 |
| Y | JP 2016-183289 A (MITSUBISHI CHEMICALS CORP.) 20 October 2016 (2016-10-20)<br>claims, paragraphs [0019]-[0023], [0067] | 1-14 |
| A | JP 2012-197394 A (NIPPON ZEON CO., LTD.) 18 October 2012 (2012-10-18)<br>claims | 1-14 |
| A | JP 2001-40056 A (INOAC CORP.) 13 February 2001 (2001-02-13)<br>claims | 1-14 |

☐ Further documents are listed in the continuation of Box C.      ☑ See patent family annex.

| | |
|---|---|
| *     Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| **10 May 2022** | **17 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/011717**

| Patent document cited in search report | | | Publication date (day/month/year) | Patent family member(s) | Publication date (day/month/year) |
|---|---|---|---|---|---|
| WO | 2019/087534 | A1 | 09 May 2019 | US 2021/0179833 A1 claims, paragraphs [0028]-[0034], [0051]-[0054], examples CN 111601846 A | |
| JP | 2016-183289 | A | 20 October 2016 | (Family: none) | |
| JP | 2012-197394 | A | 18 October 2012 | (Family: none) | |
| JP | 2001-40056 | A | 13 February 2001 | US 2002/0099162 A1 claims | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020090556 A1

- WO 2016098344 A1